# FASCICULE DE BREVET EUROPEEN

(11) **EP 1 578 236 B1**
(45) Date de publication et mention de la délivrance du brevet: **25.04.2007**
(21) Numéro de dépôt: 03813120.7
(22) Date de dépôt: 15.12.2003
(51) Int. Cl.: A47J 31/44

(54) **EMBOUT ADAPTABLE A LA SORTIE VAPEUR D'UNE MACHINE A CAFE**
DÜSE FÜR DEN DAMPFAUSTRITT EINER KAFFEEMASCHINE
NOZZLE ADAPTABLE TO STEAM OUTLET OF A COFFEE MACHINE

(30) Priorité: 16.12.2002 EP 02028234
(43) Date de publication de la demande: 28.09.2005
(73) Titulaire: NESTEC S.A., 1800 Vevey (CH)
(72) Inventeur: STIEGER, Mischa, CH-1090 La Croix (Lutry) (CH); YOAKIM, Alfred, CH-1806 St-Légier-la Chiesaz (CH)
(74) Mandataire: Borne, Patrice Daniel
(86) Numéro de dépôt international: PCT/EP2003/014228
(87) Numéro de publication internationale: WO 2004/054413

(56) Documents cités:
- EP-A- 0 801 922
- WO-A-00/16674
- US-A- 5 330 266
- US-A- 5 738 002

## Description

La présente invention concerne un embout adaptable à la sortie vapeur d'une machine à café.

Il est connu dans le domaine des machines à café des dispositifs pour émulsionner un mélange de vapeur, d'air et de lait pour faire des cappuccinos. La demande de brevet WO 00/16674 concerne un tel dispositif. L'inconvénient de ce système est qu'il est difficile de maintenir de bonnes conditions d'hygiène, en raison de l'utilisation de lait qui est un liquide gras, qui reste collé audit dispositif et conduit à des odeurs et des développements bactériologiques. Il est donc obligatoire avec ce système pour assurer de bonnes conditions d'hygiène lors de son utilisation, d'effectuer régulièrement un nettoyage. Il faut en outre noter que ce système consiste en une pluralité de pièces qu'il faut démonter pour en assurer un nettoyage efficace. Ceci nécessite donc une perte de temps pour l'utilisateur. Le brevet 5738002 concerne également un dispositif pour émulsionner un mélange de vapeur, d'air et de lait. Comme pour le dispositif précédent, il y a de nombreuses pièces pour lesquelles il faut envisager un nettoyage régulier.

Le but de la présente invention est de mettre au point un dispositif permettant de faire des cappuccinos sans les inconvénients mentionnés ci-dessus. Le but général est soit d'avoir un dispositif auto-nettoyant, soit un dispositif jetable, au moins après une journée d'utilisation. La présente invention prend en compte la seconde alternative.

La présente invention concerne un embout adaptable à la sortie vapeur d'une machine à café destiné à mousser un liquide selon la revendication indépendante 1.

De manière préférentielle l'entrée d'air consiste en un conduit débouchant dans le conduit pour l'arrivée de liquide de manière sensiblement perpendiculaire. La hauteur de ce conduit ainsi que son diamètre ne sont pas critiques. De préférence, la hauteur de ce conduit est supérieure à la hauteur de l'embouchure de vapeur. Le diamètre intérieur du conduit est de préférence équivalent au diamètre intérieur du conduit pour l'arrivée de liquide.

De manière préférentielle le liquide utilisé est du lait. L'intérêt de ce système est qu'il est simple et donc de coût peu élevé, ce qui permet de l'utiliser pendant la journée et de le jeter après quelques utilisations pour le remplacer le lendemain par un nouvel embout.

On place l'embout à la sortie vapeur de la machine et il est prêt pour son utilisation qui sera explicitée ci-dessous. On place sur le conduit pour l'arrivée du liquide un tube pour l'aspiration dudit liquide. Ce tube est destiné à être plongé dans le liquide à mousser. Ce tube est de préférence une simple paille, de longueur permettant d'atteindre le récipient contenant le liquide. Lorsqu'on souhaite préparer un cappuccino, on immerge la paille dans le lait et la vapeur d'eau arrivant par l'embouchure de l'embout crée une dépression dans ladite embouchure, ce qui crée un phénomène d'aspiration du lait dans ladite paille.

La zone élargie de l'embout comprend un moyen pour casser ou éclater le jet. Ce moyen a de préférence la forme d'un accent circonflexe, mais peut aussi être tout moyen faisant éclater le jet. La fonction de ce moyen est d'éviter que le jet arrive directement sur la sortie, pour bien canaliser ledit jet, de manière à ce qu'il sorte de l'embout en évitant toute éclaboussure.

La zone élargie se resserre vers la sortie du liquide et comprend une zone de stabilisation. Cette zone de stabilisation se présente sous la forme d'une partie cylindrique de certaine hauteur dans ladite zone élargie.

L'embout selon l'invention est fabriqué en un matériau plastique compatible dans le domaine alimentaire. La pièce est injectée, par exemple en polypropylène.

Il est important selon l'invention que l'embout soit en une seule pièce, d'une part pour de raisons de coût et d'autre part pour éviter que ladite pièce ait des zones pouvant potentiellement former des niches de dépôt de lait. Ceci permettra de pouvoir quand même utiliser ledit embout pendant une journée sans aucun risque de contamination bactérienne.

Dans une forme de réalisation préférée, pour les machines à café du commerce, on considère un conduit d'arrivée de liquide ayant un diamètre intérieur de l'ordre de 1 à 3 mm et une embouchure d'arrivée de vapeur ayant un diamètre intérieur de l'ordre de 10 à 15 mm.

Dans cette forme de réalisation, la zone d'étranglement et la zone de stabilisation ont un diamètre intérieur de l'ordre de 2 à 4 mm. La partie cylindrique de la zone de stabilisation a une hauteur d'environ 4 à 20 mm. De préférence le diamètre est de 3 mm et la hauteur de 9 à 12 mm.

Il est bien entendu que les dimensions données ci-dessus peuvent varier selon la machine et le débit de vapeur considéré.

La suite de la description est faite en relation avec les dessins, dans lesquels
Fig. 1 est une représentation en perspective de l'embout selon l'invention,
Fig. 2 est une représentation en perspective de l'embout ouvert,
Fig. 3 est une représentation de l'embout ouvert pour l'explication de son fonctionnement,
Fig. 4 est une représentation en perspective de l'embout ouvert dans une seconde forme de réalisation et
Fig. 5 est une représentation en perspective de l'embout de la figure 4, pour bien voir qu'il est en une seule pièce.

L'embout (1) selon l'invention comprend un conduit (2) pour l'arrivée du liquide et une entrée d'air (40), une embouchure (3) pour l'arrivée de vapeur, un étranglement (4) et une zone élargie (5) permettant la sortie du liquide en (6). On voit bien sur la figure que l'embout en formé de deux coques (7,8): ces deux coques sont fabriquées par injection et soudées par ultra-son par exemple ou par tout autre moyen de soudage connu dans la technique le long de la ligne (9).

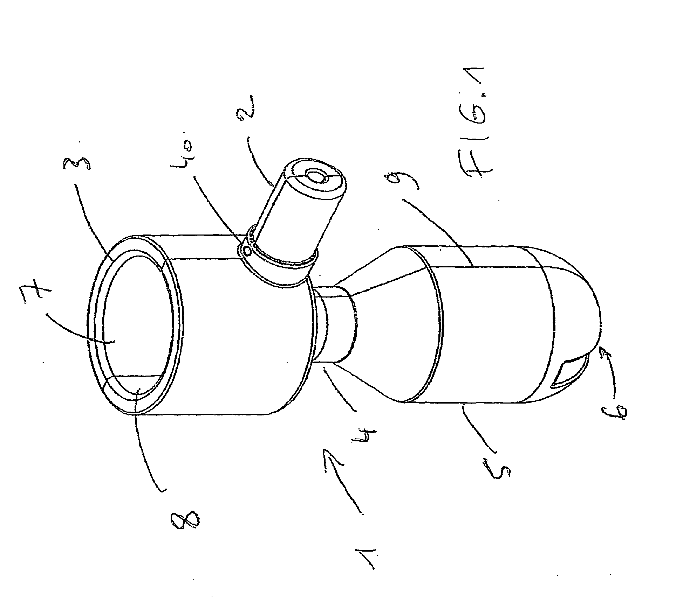

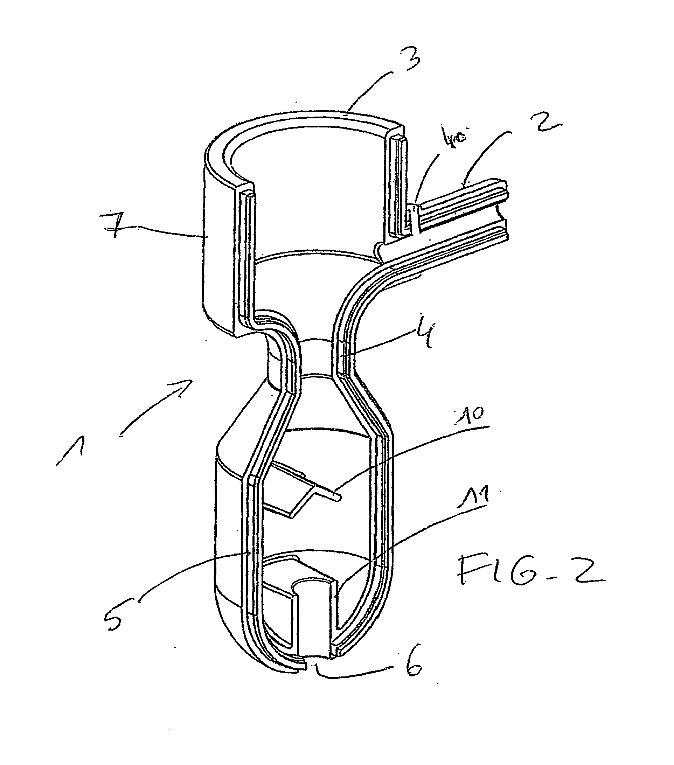

La figure 2 permet de mieux mettre en évidence l'intérieur de l'embout. Les mêmes éléments de la figure 1 ont été affectés des mêmes références. On voit bien sur cette figure le moyen (10) pour casser le jet de liquide et la zone de stabilisation (11) ayant la forme cylindrique de hauteur comprise entre 5 et 8 mm. La hauteur totale de l'embout dans cette forme de réalisation est d'environ 40 mm.

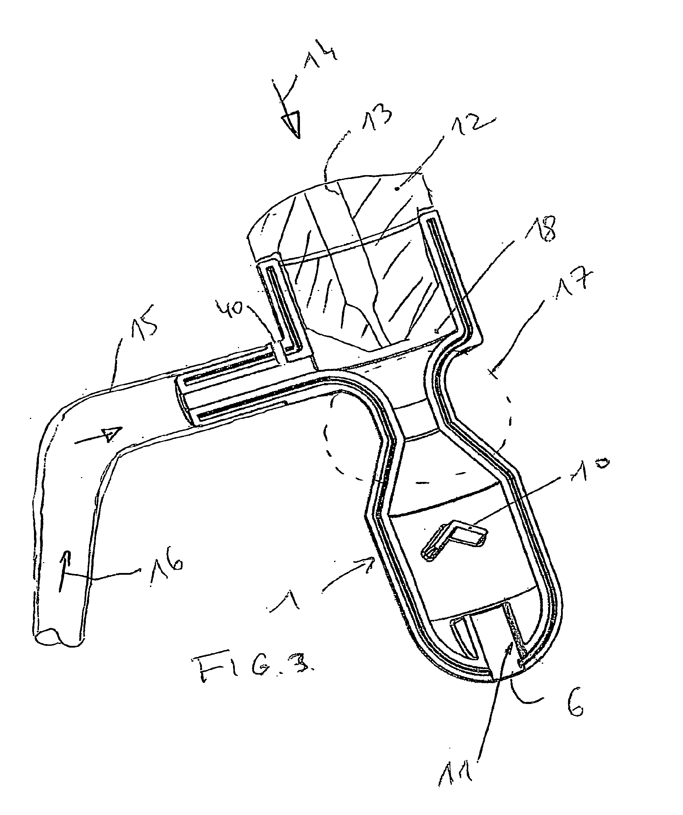

La figure 3 permet de comprendre l'utilisation de l'embout selon l'invention. L'embout (1) est disposé sur la sortie vapeur (12) d'une machine à café. On place ensuite une paille (15) sur le conduit (2). Lorqu'on souhaite faire un cappuccino la vapeur d'eau arrive selon la flèche (14) dans le conduit (13) et crée une dépression dans la zone (18), ce qui a pour effet de faire monter le lait selon la direction (16) dans la paille vers l'embout selon l'invention. La mousse est formée dans la zone (17), le jet est cassé par l'élément (10) et le lait moussé sort par la sortie (6). On peut atteindre avec l'embout un moussage de 100 % et le lait sort à une température d'environ 60 °C.

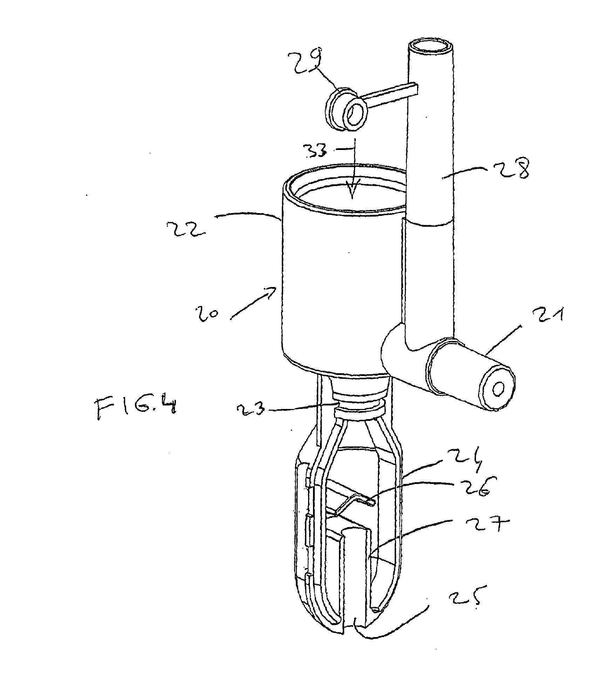

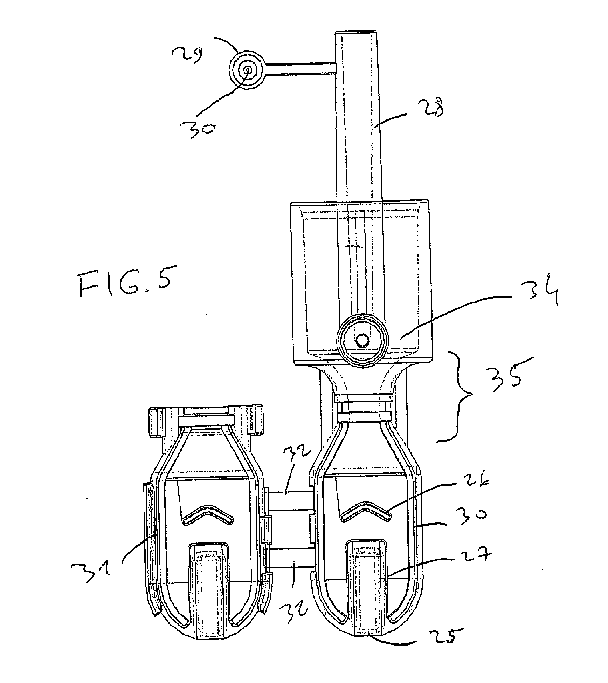

L'embout (20) dans la seconde forme de réalisation des figures 4 et 5, comprend un conduit (21) pour l'arrivée de liquide, une embouchure (22) pour l'arrivée de vapeur, un étranglement (23) et une zone élargie (24) permettant la sortie du liquide en (25). On voit bien sur la figure 5 que l'embout est formé de deux coques (30,31). Le moyen (26) permet de casser le jet de liquide et la zone de stabilisation (27) ayant la forme cylindrique permet une sortie stabilisée du jet de liquide. Par rapport à la version précédente, l'embout comprend en outre un conduit (28) permettant l'entrée d'air dans le conduit (21). Ce conduit (28) comprend un bouchon (29) avec une ouverture (30) pour permettre l'entrée d'air. Lors de l'utilisation, le bouchon est disposé sur le conduit (28). On voit bien sur la figure 5, que l'embout est en une seule pièce et que les deux coques (30,31) sont reliées par deux liens (32). Lorsqu'on veut utiliser l'embout, il suffit de rabattre la coque (31) sur la coque (30) : le système connu de jointure permet de garantir une bonne étanchéité de l'embout.

Le mode de fonctionnement est similaire à celui des figures précédentes. L'embout (20) est disposé par l'embouchure (22) sur la sortie vapeur (non représentée) d'une machine à café. On place ensuite une paille (non représentée) sur le conduit (21). Lorqu'on souhaite faire un cappuccino la vapeur d'eau arrive selon la flèche (33) et crée une dépression dans la zone (34), ce qui a pour effet de faire monter le lait dans la paille vers l'embout selon l'invention. La mousse est formée dans la zone (35), le jet est cassé par l'élément (26) et le lait moussé sort par la sortie (25). On peut atteindre avec l'embout un moussage de 100 % et le lait sort à une température d'environ 60 °C.

L'intérêt de cet embout est qu'il est bon marché : on peut donc le jeter après quelques utilisations dans la journée. Il est en une seule pièce et compatible avec toutes les pailles du commerce. Le risque de contamination est réduit, car on ne le lave pas.

## Revendications

1. Embout adaptable à la sortie vapeur d'une machine à café destiné à mousser un liquide comprenant
- une embouchure (22) pour l'arrivée de vapeur,
- un étranglement (23) dans le prolongement de ladite embouchure,
- et une zone élargie (24) dans l'axe dudit étranglement et de ladite embouchure permettant la sortie du liquide, de section sensiblement égale à la section de l'embouchure et
- sensiblement perpendiculaire à l'embouchure un conduit (21) pour l'arrivée du liquide et une entrée d'air (30) qui consiste en un conduit (28) débouchant sur le conduit pour l'arrivée de liquide,
**caractérisé en ce que** ledit embout est jetable et conçu en une seule pièce formée à partir de l'assemblage de deux coques (7, 8) injectée en matière plastique compatible dans le domaine alimentaire et soudées.

2. Embout selon la revendication 1, **caractérisé en ce que** l'entrée d'air (40) consiste en un conduit débouchant dans le conduit pour l'arrivée de liquide de manière sensiblement perpendiculaire.

3. Embout selon l'une des revendications 1 et 2, **caractérisé en ce que** le conduit (21) pour l'arrivée du liquide permet la mise en place d'un tube (15) pour l'aspiration dudit liquide.

4. Embout selon l'une des revendications 1 à 3, **caractérisé en ce que** la zone élargie comprend un moyen (26) pour casser le jet du liquide.

5. Embout selon l'une des revendications 1 à 4, **caractérisé en ce que** la zone élargie (24) comprend à sa sortie une zone de stabilisation (27).

6. Embout selon l'une des revendications 1 à 5, **caractérisé en ce que** l'embout est injecté en polypropylène.

7. Embout selon l'une des revendications 1 à 6, **caractérisé en ce que** le conduit d'arrivée de liquide et d'air a un diamètre intérieur de l'ordre de 1 à 3 mm et l'embouchure d'arrivée de vapeur a un diamètre intérieur de l'ordre de 10 à 15 mm.

8. Embout selon l'une des revendications 1 à 7, **caractérisé en ce que** l'étranglement (23) et le zone de stabilisation (27) ont un diamètre de l'ordre de 2 à 4 mm.

9. Embout selon l'une quelconque des revendications 1 à 8, **caractérisé en ce que** la zone de stabilisation (27) est une partie cylindrique d'une hauteur d'environ 4 à 20 mm.

10. Embout selon l'une quelconque des revendications 1 à 9, **caractérisé en ce que** le conduit (28) comprend un bouchon (29) avec une ouverture (30) pour permettre l'entrée d'air.

## Claims

1. Nozzle adaptable to the steam outlet of a coffee machine designed to froth a liquid comprising
- a mouthpiece (22) for the inflow of steam,
- a constriction (23) in the extension of said mouthpiece,
- and a widened zone (24) in the axis of said constriction and of said mouthpiece for the outflow of liquid, with a cross section substantially equal to the cross section of the mouthpiece and
- substantially perpendicular to the mouthpiece, a pipe (21) for the inflow of liquid and an air inlet (30) which consists of a pipe (28) emerging on the pipe for the inflow of liquid,
**characterised in that** said nozzle is disposable and designed in one piece formed from the assembly of two injection-moulded welded plastic shells (7, 8), compatible with the sphere of food.

2. Nozzle according to claim 1, **characterised in that** the air inlet (40) consists of a pipe emerging into the pipe for the inflow of liquid in a substantially perpendicular manner.

3. Nozzle according to either of claims 1 or 2,
**characterised in that** the pipe (21) for the inflow of liquid enables a tube (15) to be put in place for the aspiration of said liquid.

4. Nozzle according to one of claims 1 to 3,
**characterised in that** the widened zone includes a means (26) for breaking the liquid jet.

5. Nozzle according to one of claims 1 to 4,
**characterised in that** the widened zone (24) includes a stabilising zone (27) at its outlet.

6. Nozzle according to one of claims 1 to 5,
**characterised in that** the nozzle is injection moulded in polypropylene.

7. Nozzle according to one of claims 1 to 6,
**characterised in that** the pipe for the inflow of liquid and air has an internal diameter of the order of 1 to 3 mm and the mouthpiece for the inflow of steam has an internal diameter of the order of 10 to 15 mm.

8. Nozzle according to one of claims 1 to 7,
**characterised in that** the constriction (23) and the stabilising zone (27) have a diameter of the order of 2 to 4 mm.

9. Nozzle according to one of claims 1 to 8,
**characterised in that** the stabilising zone (27) is a cylindrical part with a height of approximately 4 to 20 mm.

10. Nozzle according to one of claims 1 to 9,
**characterised in that** the pipe (28) has a stopper (29) with an opening (30) enabling air to enter.

## Patentansprüche

1. An den Dampfaustritt einer Kaffeemaschine anpassbare Düse zum Aufschäumen einer Flüssigkeit, umfassend
- eine Mündung (22) für den Dampfzutritt,
- eine Verengung (23) in der Verlängerung der Mündung,
- und eine verbreiterte Zone (24) in der Achse der Verengung und der Mündung, die den Austritt der Flüssigkeit gestattet und im Wesentlichen denselben Querschnitt wie die Mündung hat, und
- im Wesentlichen senkrecht zur Mündung eine Leitung (21) für den Zutritt der Flüssigkeit und einen Lufteintritt (30), der aus einer in die Leitung für den Flüssigkeitszutritt mündenden Leitung (28) besteht,
**dadurch gekennzeichnet, dass** die Düse eine Wegwerfdüse ist und aus einem einzigen Stück besteht, das durch Zusammenfügen von zwei Schalen (7, 8) gebildet ist, die aus einem im Nahrungsmittelbereich kompatiblen Kunststoff spritzgegossen und verschweißt sind.

2. Düse nach Anspruch 1, **dadurch gekennzeichnet, dass** der Lufteintritt (40) aus einer Leitung besteht, die im Wesentlichen senkrecht in die Leitung für den Flüssigkeitszutritt mündet.

3. Düse nach einem der Ansprüche 1 und 2, **dadurch gekennzeichnet, dass** die Leitung (21) für den Zutritt der Flüssigkeit die Anbringung eines Rohrs (15) für die Ansaugung dieser Flüssigkeit gestattet.

4. Düse nach einem der Ansprüche 1 bis 3, **dadurch gekennzeichnet, dass** die verbreiterte Zone ein Mittel (26) zum Brechen des Flüssigkeitsstrahls aufweist.

5. Düse nach einem der Ansprüche 1 bis 4, **dadurch gekennzeichnet, dass** die verbreiterte Zone (24) an ihrem Austritt eine Stabilisierungszone (27) umfasst.

6. Düse nach einem der Ansprüche 1 bis 5, **dadurch gekennzeichnet, dass** die Düse aus Polypropylen spritzgegossen ist.

7. Düse nach einem der Ansprüche 1 bis 6, **dadurch gekennzeichnet, dass** die Flüssigkeits- und Luftzutrittsleitung einen Innendurchmesser von etwa 1 bis 3 mm aufweist und die Dampfzutrittsmündung einen Innendurchmesser von etwa 10 bis 15 mm aufweist.

8. Düse nach einem der Ansprüche 1 bis 7, **dadurch gekennzeichnet, dass** die Verengung (23) und die Stabilisierungszone (27) einen Durchmesser von etwa 2 bis 4 mm aufweisen.

9. Düse nach einem der Ansprüche 1 bis 8, **dadurch gekennzeichnet, dass** die Stabilisierungszone (27) ein zylindrischer Teil mit einer Höhe von etwa 4 bis 20 mm ist.

10. Düse nach einem der Ansprüche 1 bis 9, **dadurch gekennzeichnet, dass** die Leitung (28) einen Stopfen (29) mit einer Öffnung (30) für den Luftzutritt aufweist.
